# DEMANDE DE BREVET EUROPEEN

(11) **EP 3 823 182 A1**
(43) Date de publication de la demande: **19.05.2021**
(21) Numéro de dépôt: 20201965.9
(22) Date de dépôt: 15.10.2020
(51) Int. Cl.: H04B 7/06, H04B 7/0456

(54) **PROCÉDÉ DE SÉLECTION D'AU MOINS UN FAISCEAU, STATION DE BASE POUR LA MISE EN OEUVRE D'UN TEL PROCÉDÉ**

(30) Priorité: 14.11.2019 FR 1912696
(71) Demandeur: ORANGE, 75015 Paris (FR)
(72) Inventeur: ALTMAN, Zwi, 92326 CHATILLON (FR); NAYAK, Deepak, 560016 BANGALORE (IN); KALYANASUNDARAM, Suresh, 560103 BANGALORE (IN); SEHIER, Philippe, 78100 SAINT GERMAIN EN LAYE (FR)
(74) Mandataire: Cabinet Beau de Loménie

(57) **Abrégé**

L'invention concerne un procédé de sélection, par une station de base (gNB) multi-antennes d'un système (1) de communications sans fil, d'au moins un faisceau (Fj) de transmission pour transmettre des données à au moins un terminal (UE_i). Ledit procédé comprend :
- une étape (E1) de détermination d'une grille (GoB_2) de N2 faisceaux de transmission destinés à couvrir une portion de l'espace servie par la station de base et générés en utilisant N1 antennes de la station de base, N1 et N2 désignant des entiers tels que N2 > N1,
- une étape (E3) de sélection d'un ou plusieurs faisceaux non-adjacents de ladite grille pour transmettre des données audit au moins un terminal lors d'au moins un intervalle temporel donné.

## Description

### Technique antérieure

La présente invention appartient au domaine général des télécommunications, et notamment des communications sans fil mises en oeuvre sur des réseaux de type radio tels que des réseaux mobiles (ex. 3G, 4G, 5G, etc.), WiFI, etc.

Elle concerne plus particulièrement un procédé de sélection par une station de base multi-antennes d'un système de communications sans fil, ladite sélection se rapportant à un ou plusieurs faisceaux parmi un ensemble de faisceaux destinés à la transmission de données vers au moins un terminal attaché à la station de base. Elle concerne également un procédé d'émission de données par ladite station de base et vers ledit au moins un terminal. L'invention trouve une application particulièrement avantageuse, bien que nullement limitative, dans le cas d'un système de communications de type MIMO (acronyme de l'expression anglo-saxonne « Multiple Input Multiple Output ») utilisant plusieurs antennes en émission et en réception, et notamment dans le cas d'un système de communications de type MIMO massif s'appuyant sur un grand nombre d'antennes (typiquement de 64 à 128 antennes au niveau des stations de base actuelles, ce nombre étant amené à augmenter dans le futur).

Afin de s'adapter à la croissance continue et toujours plus rapide du trafic de données émises par les systèmes de communications sans fil, différentes technologies sont aujourd'hui mises en oeuvre, ou bien font l'objet de perfectionnements en vue d'une exploitation optimale dans les années à venir.

Parmi ces technologies, dans le contexte des systèmes de communications sans fil de type MIMO, il est connu de configurer une station de base dans le but de transmettre simultanément, à destination du terminal et en utilisant les mêmes ressources radio (ex. fréquences radio), plusieurs flux de données via plusieurs antennes d'émission de ladite station de base. La transmission simultanée de ces flux de données peut s'effectuer grâce à la formation de faisceaux de transmission directifs (encore appelée « beamforming » dans la littérature anglo-saxonne). L'utilisation de tels faisceaux permet ainsi à la station de base de délivrer des données au terminal avec une haute efficacité spectrale.

En pratique, cette technologie de génération de faisceaux peut se décliner suivant différentes mises en oeuvre. A cet effet, on connait, notamment, l'utilisation d'une grille de faisceaux, c'est-à-dire un ensemble de faisceaux pointant respectivement dans des directions données d'une portion déterminée de l'espace, afin d'assurer au moins en partie la couverture de la cellule de communication associée à la station de base. Une telle mise en oeuvre est décrite de manière abondante dans l'état de l'art. A titre d'exemple nullement limitatif, on peut citer la publication scientifique : « DFT beamforming for more accurate estimate of signal DOA with application to improving DS / CDMA receiver performance », T. B. Vu, Electronics Letters, vol. 36, no. 9, pp. 834-836, 2000, qui décrit une technique permettant de générer une grille de N faisceaux de transmission à partir de N antennes.

L'utilisation d'une grille de faisceaux présente plusieurs avantages. D'une part, elle permet d'étendre la couverture radio de la station de base dans les directions respectivement associées aux faisceaux. D'autre part, elle permet, pour un terminal couvert par l'un des faisceaux de la grille (i.e. un terminal apte à recevoir des données véhiculées par l'un des faisceaux de la grille), d'augmenter le débit de données à destination de ce dernier (et donc in fine également la puissance reçue par ce dernier) à mesure que la position de ce terminal se rapproche du lobe principal associé audit faisceau.

Toutefois, la directivité des faisceaux implique également que la distribution de puissance générée par la station de base varie dans la portion de l'espace couverte par la grille de faisceaux. En effet, une position donnée au sein de ladite portion peut être, par exemple, contenue dans un seul lobe principal associé à un faisceau, ou bien contenue dans l'intersection de deux lobes principaux respectivement associés à deux faisceaux distincts, ou bien encore n'être contenue dans aucun lobe principal d'un faisceau. Ainsi, la puissance reçue par un terminal occupant une position donnée au sein de la portion de l'espace couverte par la grille de faisceaux, mais dont ladite position n'est contenue dans aucun lobe principal d'un faisceau de la grille, ne sera pas optimale (i.e. qualité de service dégradée). Dit encore autrement, la contrepartie à l'obtention d'une transmission de données avec haute efficacité spectrale se situe dans le fait que la puissance électromagnétique rayonnée est fortement atténuée au voisinage d'un faisceau, et donc in fine entre les faisceaux eux-mêmes.

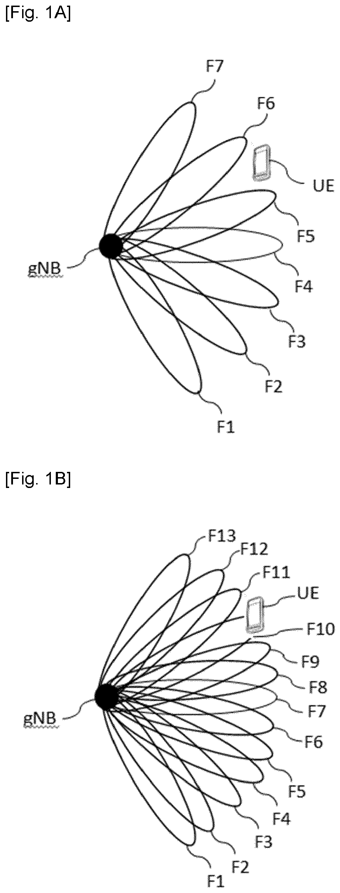

Une telle situation est illustrée à titre nullement limitatif sur la figure 1A qui représente schématiquement des faisceaux F1 à F7 émis simultanément par une station de base gNB de l'art antérieur, à partir d'une première grille implémentée au niveau de ladite station de base gNB. Plus particulièrement, la figure 1A correspond à une représentation dans un plan horizontal, encore connu sous la dénomination « plan azimutal », et sous la forme de diagramme de rayonnement, des lobes principaux respectivement associés aux faisceaux F1 à F7 de ladite première grille.

Par souci de simplification de description, on considère ici qu'un faisceau s'identifie à son lobe principal. Dans l'exemple de la figure 1A, chaque faisceau Fj, pour j compris dans l'intervalle [2, 6], est entouré par deux faisceaux Fⱼ₊₁ et Fⱼ₋₁ qui lui sont adjacents (par exemple, les faisceaux F3 et F5 sont tous deux adjacents au faisceau F4). Le faisceau F1 (respectivement le faisceau F7) n'est quant à lui adjacent qu'à un seul autre faisceau, à savoir le faisceau F2 (respectivement le faisceau F6). En outre, dans la figure 1A, lesdits faisceaux F1 à F7 présentent tous un angle d'ouverture identique et sont uniformément répartis de manière angulaire dans ledit plan horizontal (i.e. les angles séparant les directions principales associées à deux faisceaux adjacents dans le plan horizontal sont tous égaux entre eux).

Un terminal utilisateur UE, prenant ici la forme d'un téléphone cellulaire, par exemple de type smartphone, est également représenté sur la figure 1A. Ce terminal utilisateur UE est positionné dans la portion de l'espace couverte par la première grille de faisceaux, plus précisément entre les faisceaux F5 et F6 de la première grille si bien que son expérience utilisateur est dégradée (peu de puissance reçue). Plus particulièrement, l'atténuation subie, en termes de puissance, entre une position théorique du terminal UE contenue dans un des faisceaux (par exemple F5 ou F6) et la position effective de ce dernier est de l'ordre de 10 dB.

Dès lors, afin de diminuer la variation de puissance reçue au sein de la portion de l'espace servie par une station de base, il a été proposé des méthodes pour augmenter le nombre de faisceaux d'une telle première grille initialement implémentée au niveau de ladite station de base. Ces méthodes, dites de type « sur-échantillonnage » (« oversampling » dans la littérature anglo-saxonne), permettent à la station de base de déterminer, sur la base de la première grille, une seconde grille contenant les faisceaux de ladite première grille ainsi que de nouveaux faisceaux positionnés entre ces derniers.

Procéder de la sorte permet donc d'augmenter la densité de faisceaux dans la portion de l'espace que la station de base se doit de couvrir. Ainsi, un terminal qui se trouve initialement en dehors de tout faisceau de la première grille voit sa probabilité d'être désormais dans un faisceau de la seconde grille augmenter.

La figure 1B représente schématiquement une évolution de la configuration de la figure 1A, après qu'une seconde grille, correspondant à un sur-échantillonnage de la première grille, a été déterminée, conformément à l'art antérieur, par la station de base gNB.

Tel qu'illustré par la figure 1B, la station gNB peut désormais émettre simultanément des faisceaux F1 à F13 (ou séquentiellement dans le cadre d'un balayage des faisceaux pour permettre à des terminaux de sélectionner un faisceau approprié, aussi désigné par « beam sweeping » dans la littérature anglo-saxonne), étant entendu qu'un faisceau Fi de la seconde grille correspond à un faisceau Fj de la première grille pour i égal à 2j-1 (j variant de 1 à 7). En outre, chaque faisceau Fi de la seconde grille pour i pair est positionné entre deux faisceaux adjacents communs à la première grille.

Ainsi, le nouveau faisceau F10 est ici positionné entre les faisceaux F9 et F11 (correspondant respectivement aux faisceaux F5 et F6 de la figure 1A), le terminal UE étant désormais contenu dans ledit faisceau F10, profitant alors, en comparaison avec la situation illustrée par la figure 1A, d'une puissance reçue plus importante, de sorte que son expérience utilisateur est améliorée.

Les méthodes de sur-échantillonnage ne sont toutefois pas dépourvues d'inconvénients. En effet, l'augmentation correspondante de la densité de faisceaux introduit nécessairement un recouvrement plus important entre ces derniers, encore plus particulièrement entre faisceaux adjacents, en comparaison avec la situation où seule la première grille est utilisée. Or, du fait de ce recouvrement accru, les ondes radio véhiculées par chacun des faisceaux sont davantage susceptibles d'interférer entre elles. De telles interférences, désignées par l'expression « interférences inter-faisceaux » dans la suite de la description, concourent à la dégradation des conditions de transmission radio, et donc in fine à une dégradation de la qualité de service délivrée à un utilisateur (se traduisant par exemple par un mauvais rapport signal sur interférence plus bruit au niveau de l'utilisateur). Ainsi, bien qu'un terminal puisse bénéficier d'un gain de puissance reçue grâce à l'utilisation d'une seconde grille générée par sur-échantillonnage, cet avantage est au moins en partie contrebalancé par la présence desdites interférences. En conséquence, le bon fonctionnement du terminal est compromis.

### Exposé de l'invention

La présente invention a pour objectif de remédier à tout ou partie des inconvénients de l'art antérieur, notamment ceux exposés ci-avant, en proposant une solution qui permette à un terminal d'un système de communications sans fil de recevoir, de la part d'une station de base, un bon niveau de puissance électromagnétique, tout en limitant de manière efficace la présence d'interférences inter-faisceaux au niveau dudit terminal. Ainsi, en comparaison avec les solutions de l'art antérieur, le fonctionnement dudit terminal est grandement amélioré.

A cet effet, et selon un premier aspect, l'invention concerne un procédé de sélection, par une station de base multi-antennes d'un système de communications sans fil, d'au moins un faisceau de transmission pour transmettre des données à au moins un terminal, ledit procédé comprenant :
- une étape de détermination d'une grille de N2 faisceaux de transmission destinés à couvrir une portion de l'espace servie par la station de base et générés en utilisant N1 antennes de la station de base, N1 et N2 désignant des entiers tels que N2 > N1,
- une étape de sélection d'un ou plusieurs faisceaux non-adjacents de ladite grille pour transmettre des données audit au moins un terminal lors d'au moins un intervalle temporel donné.

Ainsi, la grille déterminée par la station de base correspond en quelque sorte à un sur-échantillonnage d'une grille de N1 faisceaux générés en utilisant N1 antennes, telle que décrite dans l'article de T.B.Vu cité précédemment. Une telle grille peut être générée comme dans l'article en utilisant une transformation DFT dûment dimensionnée. On note que N1 ne désigne pas nécessairement le nombre d'antennes total disponible à la station de base, mais peut correspondre à un sous-ensemble de celles-ci, notamment dans un plan particulier (par exemple dans un plan horizontal ou dans un plan vertical). Ainsi, on peut envisager que la station de base soit équipée d'un réseau d'antennes comprenant N1 x N1' antennes. De même, l'invention ne se limite pas à la détermination d'une grille de faisceaux uniformément espacés dans un plan donné. On peut notamment envisager en fonction de la position des terminaux à couvrir par la station de base, une densité de faisceaux plus importante dans une ou plusieurs directions et des faisceaux plus espacés dans d'autres directions. Autrement dit, le sur-échantillonnage envisagé par rapport à une grille comprenant N1 faisceaux n'est pas nécessairement uniforme.

Grâce à ce « sur-échantillonnage », la variation de puissance reçue au sein de la portion de l'espace servie par la station de base et couverte par lesdits N2 faisceaux est inférieure à la variation de puissance qui serait obtenue avec une grille de N1 faisceaux telle que mentionnée ci-avant. En conséquence, la probabilité qu'un terminal servi par la station de base soit contenu au centre du lobe principal d'un faisceau de la grille de N2 faisceaux est supérieure à la probabilité correspondante calculée pour une grille de N1 faisceaux.

Une fois que la grille de N2 faisceaux a été déterminée, l'invention propose de sélectionner au moins un faisceau de cette grille. Le ou les faisceaux sélectionnés sont les seuls faisceaux parmi les faisceaux de la grille qui sont générés et utilisés à un instant donné par la station de base (c'est-à-dire émis) pour transmettre des données.

En outre, la contrainte imposée à la sélection effectuée revient à considérer que si plusieurs faisceaux sont sélectionnés parmi les N2 faisceaux, ces faisceaux sélectionnés ne peuvent pas être adjacents entre eux et forment ainsi un ensemble de faisceaux non-adjacents. Par « ensemble de faisceaux non-adjacents », on fait référence ici au fait que deux faisceaux choisis quelconques dans ledit ensemble sont toujours séparés dans un plan de l'espace qui intersecte lesdits deux faisceaux choisis par au moins un des N2 faisceaux non sélectionnés.

L'invention est dès lors remarquable en ce qu'elle propose une solution permettant de combiner les avantages d'un sur-échantillonnage de grille avec ceux d'une sélection appropriée d'au moins un faisceau pour couvrir des terminaux rattachés à la station de base.

En effet, le sur-échantillonnage permet une augmentation de la densité de faisceaux dans la portion de l'espace que la station de base se doit de couvrir. Grâce à cette augmentation de densité, l'invention offre la possibilité d'assurer qu'un terminal situé dans cette portion de l'espace puisse recevoir un bon niveau de puissance électromagnétique de la part de la station de base.

De plus, en évitant de sélectionner des faisceaux adjacents, on réduit considérablement le recouvrement entre lesdits faisceaux sélectionnés, lorsque seuls ces derniers sont générés de manière simultanée au cours d'un intervalle temporel. Ainsi, grâce à cette réduction du recouvrement des faisceaux, l'invention offre la possibilité de limiter de manière efficace, lors d'une émission de données, les interférences inter-faisceaux au niveau d'un terminal servi par la station de base.

En conséquence de ces avantages combinés (assurance d'atteindre un bon niveau de puissance reçue, limitation efficace des interférences inter-faisceaux), la présente invention offre la possibilité d'améliorer le fonctionnement d'un terminal servi par la station de base.

Dans des modes particuliers de mise en oeuvre, le procédé de sélection peut comporter en outre l'une ou plusieurs des caractéristiques suivantes, prises isolément ou selon toutes les combinaisons techniquement possibles.

Dans un mode particulier de mise en oeuvre :
- l'étape de sélection est itérée pour une pluralité d'intervalles temporels,
- un seul faisceau associé à au moins un terminal est sélectionné pour chaque intervalle temporel pour transmettre des données audit au moins un terminal associé audit faisceau, ledit faisceau sélectionné et ledit au moins un terminal associé optimisant une fonction de coût lors de l'itération de l'étape de sélection considérée pour ledit intervalle temporel.

Cette fonction de coût peut être notamment une fonction caractérisant les performances atteintes sur la cellule durant ledit intervalle temporel, en tenant compte éventuellement de certaines contraintes (ex. équité entre les terminaux, etc.). Elle peut dépendre d'une ou de plusieurs métriques reflétant la qualité de la transmission au niveau des terminaux (comme par exemple le rapport signal sur bruit-plus-interférence (SINR), le débit des données, la qualité du signal, l'état d'une mémoire tampon (ou « buffer » en anglais) donnée, la latence, etc.).Une telle fonction est par exemple une fonction max(min(SINR)) évaluée sur l'ensemble des combinaisons faisceaux/terminaux possibles ou max(moyenne(SINR)). Bien entendu d'autres fonctions peuvent être envisagées.

Pour optimiser cette fonction de coût, diverses approches peuvent être envisagées. Si une solution analytique existe ou un algorithme optimal permet d'obtenir avec une complexité raisonnable une solution pour optimiser cette fonction de coût, alors elle peut être mise en oeuvre par la station de base lors de l'étape de sélection à chaque itération.

En variante, on peut envisager une approche sous-optimale consistant à sélectionner des faisceaux et des terminaux optimisant lors de chaque itération un critère d'ordonnancement donné. Cette approche offre une solution pour maximiser les performances sur la cellule, raisonnable en termes de complexité.

Par exemple, dans un mode particulier de mise en oeuvre, ledit procédé comporte, avant l'étape de sélection, une étape d'association d'une pluralité de terminaux avec des faisceaux respectifs de la grille, et :
- l'étape de sélection est itérée pour une pluralité d'intervalles temporels,
- un seul faisceau est sélectionné pour chaque intervalle temporel, ledit faisceau sélectionné étant le faisceau associé à au moins un terminal optimisant, lors de l'itération de l'étape de sélection considérée pour ledit intervalle temporel, un critère d'ordonnancement donné appliqué sur au moins une partie de ladite pluralité de terminaux.

Le mode de mise en oeuvre dans lequel un unique terminal est associé au faisceau, vise une émission à un instant donné mono-utilisateur de la part de la station de base, aussi couramment désignée par SU-MIMO (« SU » étant l'acronyme de l'expression anglo-saxonne « Single User »). Il est simple à mettre en oeuvre, aussi bien d'un point de vue matériel que logiciel, ce qui permet de limiter le coût de réalisation de l'invention.

On peut en variante envisager un mode de mise en oeuvre dans lequel un même faisceau est utilisé pour servir plusieurs terminaux simultanément. Dans ce mode de mise en oeuvre, on peut en outre utiliser un multiplexage fréquentiel pour distinguer les terminaux et limiter l'interférence générée entre ces derniers.

La fonction de coût et le critère d'ordonnancement permettent de tenir compte, au moment de leur évaluation, de priorités relatives entre terminaux, ces priorités étant définies par la nature même de la fonction de coût ou du critère d'ordonnancement considéré. Autrement dit, la fonction de coût, respectivement le critère d'ordonnancement permet de créer une hiérarchie entre les terminaux, cette hiérarchie étant avantageusement respectée du fait que la sélection d'un faisceau s'effectue au regard d'une optimisation de la fonction de coût, respectivement du critère d'ordonnancement.

Comme la fonction de coût, le critère d'ordonnancement peut être fonction d'une ou de plusieurs métriques reflétant la qualité de la transmission au niveau des terminaux. Par exemple, le critère d'ordonnancement est défini comme la métrique d'équité proportionnelle. Cette métrique évolue dans le temps dans la mesure où elle permet de tenir compte de la consommation de ressources radio allouées par la station de base à chaque terminal servi par ladite station de base. Plus particulièrement, ladite métrique d'équité proportionnelle est égale au rapport entre le débit de données instantané obtenu au niveau d'un terminal servi par la station de base et un débit de données moyen obtenu sur un intervalle de temps donné au niveau du même terminal. Dès lors, considérer cette métrique d'équité proportionnelle pour hiérarchiser des terminaux entre eux revient à maximiser une fonction de coût correspondant à la somme des logarithmes des débits moyens respectivement associés à ces terminaux La métrique d'équité proportionnelle est connue de l'homme de l'art et décrite, par exemple, dans les publications suivantes :
- « Allocation des ressources radio en LTE », F. Bendaoud, M. Abdennebi, F. Didi, International Congress on Telecommunication and Application'14, Algeria, 23-27 Avril 2014 ;
- « Performance of Proportional Fair Scheduling for Downlink PD-NOMA Networks », IEEE Transactions on Wireless Communications, vol. 17, issue 10, 2018.

Aucune limitation n'est cependant attachée au critère d'ordonnancement considéré pour ce mode de mise en oeuvre, ou, plus largement, pour l'ensemble de l'invention.

Par exemple, le critère d'ordonnancement peut être basé sur l'une quelconque des métriques parmi au moins :
- une métrique d'équité proportionnelle ;
- une métrique d'équité proportionnelle exponentielle ;
- une métrique d'équité proportionnelle pondérée ;
- une métrique d'équité Max-Min ;
- une métrique d'attente équitable ;
- une métrique de débit maximal ;
- une métrique dépendant des services fournis aux terminaux ; etc.

Cette liste n'est donnée qu'à titre illustratif, et d'autres critères d'ordonnancement peuvent encore être envisagés en variante, comme par exemple un critère de type Round Robin.

Dans un mode particulier de mise en oeuvre, une pluralité de faisceaux est sélectionnée pour servir une pluralité de terminaux attachés à la station de base lors dudit au moins un intervalle temporel.

Le fait de considérer plusieurs faisceaux pour un intervalle temporel donné offre la possibilité de transmettre de manière simultanée des données vers une pluralité de terminaux servis par la station de base. Un tel mode de mise en oeuvre vise ainsi une émission à un instant donné multi-utilisateurs de la part de la station de base, aussi couramment désignée par MU-MIMO (« MU » étant l'acronyme de l'expression anglo-saxonne « Multiple User »). On note que comme mentionné précédemment, un même faisceau peut être utilisé pour servir un seul utilisateur ou plusieurs utilisateurs simultanément auquel cas un multiplexage additionnel (par exemple fréquentiel) est préférentiellement envisagé pour séparer les utilisateurs servis par un même faisceau.

En conséquence, au cours d'un intervalle temporel, plusieurs terminaux servis par les faisceaux sélectionnés pour cet intervalle temporel pourront bénéficier des avantages de l'invention. Leurs fonctionnements respectifs peuvent donc être améliorés.

Dans un mode particulier de mise en oeuvre, les faisceaux sont associés à des indices respectifs distincts, lesdits faisceaux étant regroupés, en fonction de leurs indices respectifs, dans des ensembles prédéterminés, les faisceaux sélectionnés pour ledit au moins un intervalle temporel étant les faisceaux appartenant à un desdits ensembles prédéterminés.

Du fait que lesdits ensembles soient prédéterminés, la mise en oeuvre de ce mode particulier est facilitée, aussi bien d'un point de vue matériel que logiciel, ce qui permet de limiter le coût de réalisation de l'invention.

Dans un mode particulier de mise en oeuvre, l'étape de sélection comporte une sous-sélection du faisceau associé à au moins un terminal optimisant, lors de la mise en oeuvre de ladite sous-sélection, une fonction de coût évaluée sur au moins une partie de ladite pluralité de terminaux, ladite sous-sélection étant itérée au plus un nombre déterminé N3 de fois, et ladite au moins une partie de terminaux considérée au cours d'une itération de la sous-sélection étant formée de terminaux dont les faisceaux associés sont séparés des faisceaux sélectionnés lors des itérations précédentes par au moins un faisceau.

Ce mode particulier constitue une alternative de mise en oeuvre au mode dans lequel les faisceaux sont sélectionnés à partir desdits ensembles prédéterminés. Outre le fait d'offrir la possibilité de transmettre de manière simultanée des données vers une pluralité de terminaux servis par la station de base, ce mode de mise en oeuvre hérite des avantages liés à l'évaluation, lors de chaque itération de ladite sous-étape, du critère d'ordonnancement.

En variante, ledit procédé comporte, avant l'étape de sélection, une étape d'association de ladite pluralité de terminaux avec des faisceaux respectifs de la grille, l'étape de sélection comportant une sous-sélection du faisceau associé à un terminal optimisant, lors de la mise en oeuvre de ladite sous-sélection, un critère d'ordonnancement donné appliqué sur au moins une partie de ladite pluralité de terminaux,
ladite sous-sélection étant itérée au plus un nombre déterminé N3 de fois, et ladite au moins une partie de terminaux considérée au cours d'une itération de la sous-sélection étant formée de terminaux dont les faisceaux associés sont séparés des faisceaux sélectionnés lors des itérations précédentes par au moins un faisceau.

Le critère d'ordonnancement considéré ici est similaire à celui mentionné auparavant pour le cas où un seul faisceau est sélectionné au cours d'un intervalle temporel, et peut par conséquent être basé sur une métrique choisie dans une liste identique à celle donnée pour ce cas.

Dans un mode particulier de mise en oeuvre, la station de base est configurée pour émettre simultanément N4 faisceaux de transmission, le nombre N3 étant égal à N4.

Dans un mode particulier de mise en oeuvre, l'étape de sélection est itérée pour une pluralité d'intervalles temporels distincts entre eux.

Dans un mode particulier de mise en oeuvre, l'association d'un terminal avec un faisceau de la grille peut s'effectuer en fonction d'une information reçue en provenance dudit terminal reflétant un niveau de qualité d'une transmission de données vers ledit terminal utilisant ledit faisceau.

Cette information peut être de différentes natures. Ainsi, il peut s'agir par exemple d'un indice ou d'un ensemble d'indices ordonnés correspondant aux faisceaux optimisant un critère de qualité donné au niveau du terminal (par exemple, optimisant le débit instantané, la puissance reçue, le rapport signal-sur-interférence plus bruit, etc.), ou d'un indicateur de qualité de la transmission (aussi désigné par CQI pour « Channel Quality Information » en anglais), etc.

Selon un deuxième aspect, l'invention concerne un procédé de transmission, par une station de base multi-antennes d'un système de communications sans fil, de données à au moins un terminal, ledit procédé de transmission comportant :
- une étape de sélection d'au moins un faisceau de transmission pour transmettre des données audit au moins un terminal selon un procédé de sélection conforme à l'invention,
- une étape de transmission de données audit au moins un terminal au moyen dudit au moins un faisceau sélectionné.

Ce procédé de transmission, puisqu'il s'appuie de manière essentielle sur le procédé de sélection selon l'invention, bénéficie des avantages déjà mentionnés précédemment pour ledit procédé de sélection.

Selon un troisième aspect, l'invention concerne un programme d'ordinateur comportant des instructions pour la mise en oeuvre d'un procédé de sélection selon l'invention ou d'un procédé de transmission selon l'invention lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un quatrième aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un cinquième aspect, l'invention concerne une station de base multi-antennes d'un système de communications sans fil, ladite station de base comportant :
- un module de détermination, configuré pour déterminer une grille de N2 faisceaux de transmission destinés à couvrir une portion de l'espace servie par la station de base et générés en utilisant N1 antennes de la station de base, N1 et N2 désignant des entiers tels que N2 > N1,
- un module de sélection, configuré pour sélectionner un ou plusieurs faisceaux non-adjacents de ladite grille pour transmettre des données audit au moins un terminal lors d'au moins un intervalle temporel donné,
- des moyens de communication, configurés pour transmettre, grâce à le ou les faisceaux sélectionnés, lesdites données audit au moins un terminal lors dudit moins un intervalle temporel.

Selon un sixième aspect, l'invention concerne un système de communications sans fil comportant au moins une station de base selon l'invention ainsi qu'au moins un terminal attaché à ladite au moins une station de base.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1A] la figure 1A représente schématiquement des faisceaux émis simultanément par une station de base de l'art antérieur, à partir d'une première grille implémentée au niveau de ladite station de base ;
[Fig. 1B] la figure 1B représente schématiquement une évolution de la configuration de la figure 1A, après qu'une seconde grille, correspondant à un sur-échantillonnage de la première grille, ait été déterminée, conformément à l'art antérieur, par la station de base de la figure 1A ;
[Fig. 2] la figure 2 représente schématiquement, dans son environnement, un mode particulier de réalisation d'un système de communications sans fil selon l'invention ;
[Fig. 3] la figure 3 représente schématiquement un exemple d'architecture matérielle d'une station de base selon l'invention ;
[Fig. 4] la figure 4 représente, sous forme d'ordinogramme, les principales étapes d'un procédé de sélection selon l'invention telles qu'elles sont mises en oeuvre par la station de base de la figure 3 ;
[Fig. 5] la figure 5 représente schématiquement un premier mode de mise en oeuvre du procédé de sélection de la figure 4 ;
[Fig. 6] la figure 6 représente schématiquement un deuxième mode de mise en oeuvre du procédé de sélection de la figure 4 ;
[Fig. 7] la figure 7 représente schématiquement un troisième mode de mise en oeuvre du procédé de sélection de la figure 4 ;
[Fig. 8] la figure 8 représente, sous forme d'ordinogramme, les principales étapes d'un procédé de transmission selon l'invention telles qu'elles sont mises en oeuvre par la station de base de la figure 3.

### Description de modes de réalisation

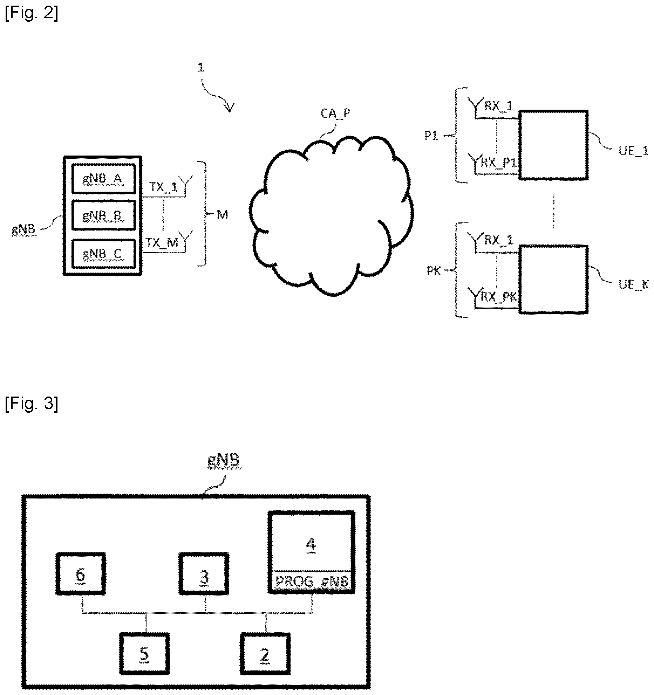

La figure 2 représente schématiquement, dans son environnement, un mode particulier de réalisation d'un système 1 de communications sans fil selon l'invention.

Tel qu'illustré par la figure 2, le système 1 de communications sans fil est un système multi-antennes ou MIMO comprenant :
- une station de base gNB, conforme à l'invention, équipée de M antennes d'émission TX_1, TX_2,..., TX_M (M désignant un entier supérieur à 1) ;
- une pluralité de terminaux UE_1, UE_2,..., UE_K attachés à la station de base gNB, chaque terminal UE_i étant équipé de Pi antennes de réception RX_1, RX_2,..., RX_Pi (K et Pi désignant des entiers supérieurs à 1).

Ainsi, dans le mode de réalisation décrit ici, il est considéré que le système 1 de communications comporte une pluralité de terminaux. Le nombre K de ces terminaux ne constitue pas un facteur limitant de l'invention. Toutefois, afin de simplifier la description, on considère ici que K désigne le nombre de terminaux susceptibles d'être actifs simultanément à un instant donné pour recevoir des données de la part de la station de base gNB. Dans l'état actuel de la technique, un tel nombre K est généralement compris entre 2 et 8. Il convient en outre de noter que l'invention reste applicable à un système de communications sans fil comprenant un unique terminal.

Selon ce mode de réalisation, le nombre M d'antennes d'émission de la station de base gNB est très largement supérieur au nombre K de terminaux. Par exemple, le nombre M d'antennes d'émission est compris entre 64 et 128. de sorte que pour un nombre K compris entre 2 et 8, le système 1 de communications sans fil est considéré de type MIMO massif. Rien n'exclut cependant de considérer un système 1 de communications d'un autre type (MIMO non massif, MISO, etc.).

Un terminal UE_i (i étant un indice compris entre 1 et K) correspond par exemple à un téléphone cellulaire, par exemple de type smartphone, une tablette tactile, un assistant personnel numérique, un ordinateur personnel, etc. D'une manière générale, aucune limitation n'est attachée à la forme prise par un terminal UE_i dès lors qu'il est apte à communiquer avec la station de base gNB.

De plus, un terminal UE_i peut occuper une position fixe ou bien encore être mobile, l'invention s'appliquant indifféremment à l'une ou l'autre de ces configurations. Pour la suite de la description, et afin de faciliter la présentation de modes de réalisation de l'invention, on considère de manière non limitative que les terminaux UE_1, UE_2,..., UE_K occupent des positions respectives fixes.

Selon l'invention, les terminaux UE_1, UE_2,..., UE_K peuvent être classés entre eux de sorte à optimiser une fonction de coût visant à maximiser les performances atteintes sur la cellule couverte par la station de base gNB. On note que suivant les conditions envisagées pour les transmissions de données par la station de base gNB (ex. un ou plusieurs utilisateurs servis par un même faisceau de transmission émis par la station de base, multiplexage fréquentiel, équité entre les utilisateurs, etc.), cette fonction de coût peut être optimisée sous différentes contraintes reflétant ces conditions.

Diverses fonctions de coût peuvent être envisagées, telles que par exemple max(min SINR) ou max(SINR moyen) optimisées sur tout ou partie des terminaux, éventuellement sous contraintes. Pour réaliser une telle optimisation avec une complexité raisonnable, dans le mode de réalisation décrit ici, on classe les terminaux UE_1,...UE_K au moyen d'un critère d'ordonnancement noté ici CR_O évalué par la station de base gNB. Cette approche peut s'avérer sous-optimale mais elle présente l'avantage de pouvoir être implémentée avec une complexité acceptable.

Plus particulièrement, dans le mode de réalisation décrit ici, on considère par exemple pour ordonnancer les utilisateurs un critère d'ordonnancement CR_O basé sur la métrique d'équité proportionnelle (encore dite « Proportional Fair » dans la littérature anglo-saxonne). On peut montrer qu'optimiser une telle métrique permet de maximiser une fonction de coût correspondant à la somme, sur les terminaux considérés, des logarithmes des débits moyens respectivement associés à ces terminaux. Une telle métrique est bien connue de l'homme de l'art, et n'est par conséquent pas détaillée plus avant ici. Tout au plus, on rappelle ici que cette métrique évolue dans le temps dans la mesure où elle permet de tenir compte de la consommation de ressources radio allouées par la station de base gNB à chaque terminal UE_i.

Il convient de noter que le choix d'un critère d'ordonnancement CR_O correspondant à la métrique d'équité proportionnelle ne constitue qu'une variante d'implémentation de l'invention. D'autres choix sont possibles, comme par exemple un critère d'ordonnancement correspondant à l'une quelconque des métriques, également connues, parmi : la métrique d'équité proportionnelle exponentielle, la métrique d'équité proportionnelle pondérée, la métrique d'équité Max-Min, la métrique d'attente équitable (dite encore « Fair Queuing » dans la littérature anglo-saxonne), la métrique de débit maximal (« Maximum Throughput » dans la littérature anglo-saxonne), une métrique dépendant des services fournis aux terminaux, etc. On peut également envisager un critère d'ordonnancement de type Round Robin, etc.

La station de base gNB et les terminaux UE_1, UE_2,..., UE_K sont aptes à communiquer entre eux, au travers d'un canal de propagation CA_P qui les sépare et au sein d'une cellule de communication (non représentée sur la figure 2) dont la couverture réseau est assurée par la station de base gNB.

Ladite cellule de communication appartient à un réseau de communications sans fil (non représenté sur la figure 2), support des communications établies entre la station de base gNB et les terminaux UE_1, UE_2,..., UE_K. Pour la suite de la description, on considère de manière non limitative que ledit réseau de télécommunications est un réseau mobile de type 5G offrant un mode de communication selon un mode FDD (acronyme de l'expression anglo-saxonne « Frequency Division Duplex »). Par ailleurs, dans le présent exemple de réalisation, ladite cellule de communication correspond à une macro-cellule. Rien n'exclut toutefois de considérer une cellule de taille différente, comme par exemple une micro-cellule, une pico-cellule, etc.

Ces hypothèses ne sont pas limitatives en soi, l'invention s'appliquant également à d'autres types de réseaux de télécommunications sans fil ou mobiles, fonctionnant en mode FDD mais également en mode TDD (acronyme de l'expression anglo-saxonne « Time Division Duplex »). Par exemple, dans un réseau 5G, l'invention peut s'appliquer pour le mode FDD aux canaux transportant des données de contrôle et aux canaux transportant des données utiles. En ce qui concerne le mode TDD, et toujours dans le cadre d'un réseau 5G, l'invention peut par exemple s'appliquer :
- aux canaux transportant des données de contrôle et aux canaux transportant des données utiles si on se trouve dans des conditions où la couverture n'est pas bonne, ou bien
- pour simplifier la sélection de faisceaux pour servir les terminaux rattachés à la station de base telle que présentée en détail ci-après, étant entendu qu'une fois ladite sélection effectuée, des données de contrôle et / ou utiles sont transmises aux terminaux autrement que grâce aux faisceaux sélectionnés.
Le document de F. Vook et al. intitulé « MIMO and beamforming solutions for 5G technology », 2014 IEEE MTT-S International Microwave Symposium (IMS2014), décrit un exemple de réseau 5G dans lequel l'invention peut s'appliquer comme indiqué ci-avant.

D'une manière générale, l'homme de l'art sait adapter, si besoin est, l'invention telle que décrite ici en fonction du mode (FDD ou TDD) considéré.

La station de base gNB est initialement configurée pour générer, au moyen de N1 antennes parmi les M antennes qui l'équipent (N1 étant un entier inférieur ou égal à M), N1 faisceaux de transmission, ces derniers servant de support à la transmission simultanée de plusieurs flux de données pour servir une portion déterminée de l'espace. La génération desdits N1 faisceaux de transmission s'effectue grâce à une grille de faisceaux, dite « première grille de faisceaux » GoB_1, implémentée au niveau de la station de base gNB.

A titre d'exemple nullement limitatif, on suppose ici que la station de base gNB est équipée de M=64 antennes d'émission et peut couvrir, par le biais de la première grille de faisceaux GoB_1, une portion de l'espace formant, dans le plan azimutal, un angle de 120°. En outre, dans cet exemple, la première grille de faisceaux GoB_1 comporte sept faisceaux F1 à F7, générés en utilisant N1=7 antennes de la station de base gNB, selon une configuration identique à celle représentée par la figure 1A, à savoir donc que les angles d'ouverture respectifs des faisceaux sont identiques et que lesdits faisceaux sont uniformément répartis de manière angulaire dans ledit plan azimutal. Dès lors, deux faisceaux adjacents sont séparés entre eux par un écart angulaire égal à 20° compté entre les axes principaux desdits deux faisceaux.

Rien n'exclut toutefois de considérer, suivant d'autres exemples non détaillés ici, une grille de faisceaux comportant un nombre de faisceaux différents de sept et / ou des écarts angulaires entre les directions des faisceaux différents de 20° ainsi qu'éventuellement non tous égaux.

De plus, rien n'exclut non plus de considérer une grille dont les faisceaux sont contenus dans un autre plan que le plan azimutal (comme par exemple un plan vertical, encore connu sous la dénomination « plan d'élévation »), voire également des faisceaux répartis dans plusieurs plans distincts.

Il importe de noter que lorsque le nombre N1 est inférieur au nombre total M d'antennes disponibles à la station de base, lesdites N1 antennes peuvent toutes être agencées dans un même plan (par exemple dans un plan horizontal ou dans un plan vertical).

D'une manière générale, le paramétrage d'une grille de faisceaux est connu et maitrisé par l'homme de l'art, si bien qu'il n'est pas décrit plus avant ici. L'homme de l'art sait également comment implémenter, via des moyens configurés de façon logicielle (programme d'ordinateur spécifique) et / ou matérielle (FPGA, PLD, ASIC, etc.), une telle première grille GoB_1 de faisceaux au niveau de la station de base gNB.

La figure 3 représente schématiquement un exemple d'architecture matérielle de la station de base gNB selon l'invention.

La station de base gNB dispose, dans le mode de réalisation envisagé ici, de l'architecture matérielle d'un ordinateur. Tel qu'illustré par la figure 3, la station de base gNB comporte, notamment, un processeur 2, une mémoire vive 3, une mémoire morte 4 et une mémoire non volatile 5.

La mémoire morte 4 de la station de base gNB constitue un support d'enregistrement conforme à l'invention, lisible par le processeur 2 et sur lequel est enregistré un programme d'ordinateur PROG_gNB conforme à l'invention, comportant des instructions pour l'exécution des étapes d'un procédé de sélection selon l'invention. Le programme PROG_gNB définit des modules fonctionnels de la station de base gNB, qui s'appuient ou commandent les éléments matériels 3 à 5 de la station de base gNB cités précédemment, et qui comprennent notamment :
- un module de détermination gNB_A, configuré pour déterminer une grille GoB_2 de N2 faisceaux de transmission destinés à couvrir la portion de l'espace servie par la station de base et générés en utilisant lesdites N1 antennes de la station de base, N2 désignant un entier tel que N2 > N1,
- un module d'association gNB_B, configuré pour associer chaque terminal UE_i avec un faisceau de la seconde grille GoB_2,
- un module de sélection gNB_C, configuré pour sélectionner plusieurs faisceaux non-adjacents de ladite grille GoB_2 pour transmettre des données aux terminaux UE_1,..., UE_K lors d'au moins un intervalle temporel donné.

L'ensemble de faisceaux non- sélectionnés par le module de sélection gNB_C forment donc un sous-ensemble des N2 faisceaux de la seconde grille GoB_2. Par « ensemble de faisceaux non-adjacents », on fait référence ici au fait que deux faisceaux choisis quelconques dans ledit ensemble sont toujours séparés dans un plan de l'espace qui intersecte lesdits deux faisceaux choisis par au moins un des N2 faisceaux non sélectionnés.

La station de base gNB comporte en outre des moyens de communication 6 lui permettant d'émettre des signaux sur le réseau de communication à destination d'autres équipements comme notamment à destination des terminaux UE_1, UE_2,..., UE_K. Ces moyens de communication 6 intègrent notamment les M antennes d'émission TX_1,..., TX_M de la station de base gNB, ainsi que des moyens, de type connus en soi, pour mettre en forme des signaux émis sur les M antennes d'émission conformément au protocole de communication défini sur le réseau de télécommunications. Plus particulièrement, lesdits moyens de communications 6 sont également configurés pour transmettre des données aux terminaux UE_1,..., UE_K lors dudit moins un intervalle temporel donné.

La station de base gNB peut en outre comprendre d'autres moyens matériels (amplificateurs de puissance, etc.) connus de l'homme du métier et qui ne sont pas décrits en détail ici.

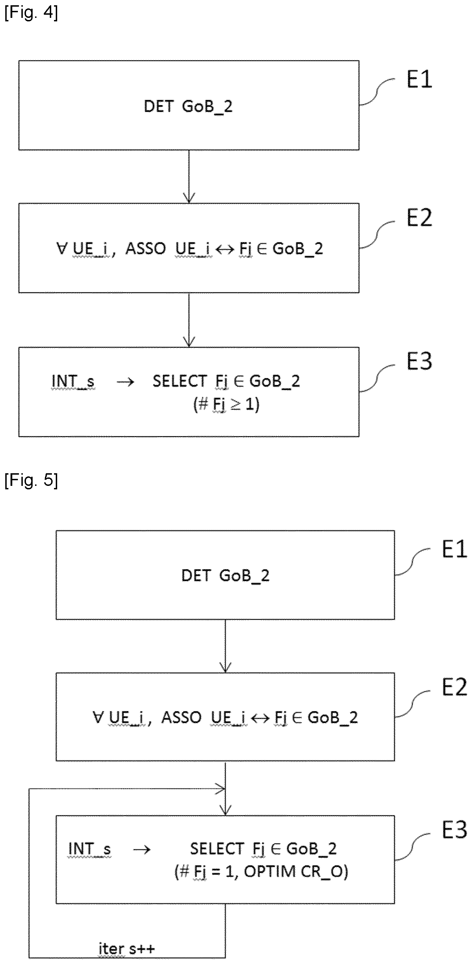

La figure 4 représente, sous forme d'ordinogramme, les principales étapes du procédé de sélection selon l'invention telles qu'elles sont mises en oeuvre par la station de base gNB du système 1 de communications sans fil.

Pour rappel, la première grille de faisceaux GoB_1 est ici, avant même la mise en oeuvre dudit procédé de sélection, implémentée au niveau de la station de base gNB pour la génération de N1 faisceaux dans ladite portion déterminée de l'espace au moyen de N1 antennes choisies parmi les M antennes de la station de base. Une telle configuration de la station de base gNB est qualifiée ci-après de « configuration initiale ».

Tel qu'illustré par la figure 4, ledit procédé de sélection comporte tout d'abord une étape E1 de détermination d'une seconde grille de faisceaux GoB_2 permettant la génération de N2 faisceaux avec les N1 antennes précédemment choisies de la station de base gNB, N2 étant supérieur (strictement) à N1. Cette étape E1 de détermination est mise en oeuvre par le module de détermination gNB_A, de sorte qu'une fois ladite seconde grille GoB_2 déterminée, la station de base gNB est en mesure de générer lesdits N2 faisceaux dans ladite portion de l'espace.

Comme mentionné auparavant, la détermination de la seconde grille GoB_2 peut être effectuée au moyen d'une transformation DFT (acronyme de l'expression « Discrete Fourier Transform » dans la littérature anglo-saxonne) dûment dimensionnée. En pratique, les faisceaux de la première grille GoB_1 étant eux-mêmes générés au moyen d'une première transformation DFT, la détermination de la seconde grille GoB_2 s'effectue au moyen d'une deuxième transformation DFT paramétrée de sorte que les angles (les arguments des fonctions trigonométriques) qui lui sont associés soient translatés par rapport aux angles de ladite première transformation DFT. Une telle manière de procéder est connue de l'homme de l'art, et n'est donc pas explicitée ici en détails.

Selon un exemple de mise en oeuvre, les N1 faisceaux de la première grille GoB_1 sont communs aux N2 faisceaux de la seconde grille GoB_2. Ainsi, dans la mesure où N2 est supérieur à N1, la mise en oeuvre de l'étape E1 peut être vue comme un sur-échantillonnage de la première grille GoB_1.

Alternativement, si par exemple les positions respectives d'au moins une partie des terminaux UE_1, UE_2,..., UE_K sont connues, seule une partie de la première grille GoB_1, apte à couvrir lesdites positions connues, est sur-échantillonnée. Ainsi, dans ce cas, la seconde grille GoB_2 est déterminée de sorte que seule une partie des N1 faisceaux de la première grille GoB_1 est commune avec ladite seconde grille GoB_2.

En tout état de cause, que tous les faisceaux de la première grille GoB_1, ou bien seulement une partie, soient communs avec ceux de la seconde grille GoB_2, les configurations respectivement initiale et nouvelle diffèrent entre elles, notamment, en ce que la densité de faisceaux associée à la nouvelle configuration est supérieure à la densité de faisceaux de la configuration initiale.

Ainsi, à l'issue de l'étape E1, ladite seconde grille GoB_2 est implémentée (configurée) au niveau de la station de base gNB. Cette mise à jour de la configuration initiale de la station de base gNB est qualifiée ci-après de « nouvelle configuration ».

Dans un exemple particulier de mise en oeuvre, la configuration initiale de la station de base gNB est identique à celle de la figure 1A, et la nouvelle configuration de ladite station de base gNB est identique à celle de la figure 1B. Selon cette nouvelle configuration, la seconde grille de faisceaux GoB_2 est apte à la génération, par la station gNB, de treize faisceaux F1 à F13 (N2 = 13). En outre, deux faisceaux adjacents de ladite seconde grille GoB_2 sont séparés entre eux par un écart angulaire égal à 10°. En d'autres mots, la seconde grille GoB_2 correspond à un sur-échantillonnage de la première grille GoB_1 proche d'un facteur 2.

Le choix consistant à sur-échantillonner la première grille GoB_1 de sorte que les faisceaux de la seconde grille GoB_2 soient séparés entre eux d'un écart angulaire égal à 10° ne constitue toutefois qu'une variante d'implémentation de l'invention. Rien n'exclut par exemple de considérer d'autres valeurs d'écarts angulaires, éventuellement non toutes égales entre elles. Rien n'exclut non plus de considérer un sur-échantillonnage plus important (N2 supérieur à 13, par exemple N2 égal à 2 fois ou 4 fois N1, les inventeurs ayant constaté que de tels ratios permettaient d'obtenir un bon compromis entre complexité de mise en œuvre du procédé de sélection, en termes de ressources de calcul, et gain de performance, en termes de débit de données transmises aux terminaux) ou moins important (N2 inférieur à 13).

Selon un autre exemple de mise en œuvre, si les faisceaux de la première grille GoB_1 sont contenus dans plusieurs plans distincts, la deuxième grille GoB_2 est déterminée par sur-échantillonnage dans un, plusieurs voire tous lesdits plans.

Par exemple, considérons à titre illustratif la configuration initiale selon laquelle la station de base gNB comporte un réseau d'antennes comprenant Mx.Mz éléments d'antenne, Mx désignant le nombre d'éléments d'antenne dans chaque plan azimutal et Mz désignant le nombre d'éléments d'antenne dans chaque plan d'élévation, un élément d'antenne correspondant, de manière connue en soi, à une antenne élémentaire (autrement dit à une « antenne » au sens de l'invention). Autrement dit, selon ladite configuration initiale, au plus Mx faisceaux (respectivement au plus Mz faisceaux) peuvent être générés dans chaque plan azimutal (respectivement dans chaque plan d'élévation). La nouvelle configuration de la station de base gNB, obtenue après mise en oeuvre de l'étape E1, est alors telle que la seconde grille GoB_2 permet de générer Mx_NEW faisceaux dans chaque plan azimutal et / ou Mz_NEW faisceaux dans chaque plan d'élévation, Mx_NEW (respectivement Mz_NEW) étant supérieur à Mx (respectivement Mz) (par exemple Mx_New est égal à k x Mx et / ou Mz_NEW est égal à k' x Mz, avec k et k' des nombres entiers compris entre 2 et 4).

D'une manière générale, aucune limitation n'est attachée au sur-échantillonnage pouvant être envisagé pour la première grille GoB_1. En outre, l'homme de l'art sait comment configurer la station de base gNB, plus particulièrement son module de détermination gNB_A, via des moyens configurés de façon logicielle (programme d'ordinateur spécifique) et / ou matérielle (FPGA, PLD, ASIC, etc.), pour que ladite station gNB puisse mettre en oeuvre l'étape E1, et ainsi réaliser un sur-échantillonnage de la première grille GoB_1.

Dans le mode de réalisation décrit ici, le procédé de sélection comporte, à l'issue de l'étape E1, une étape E2 d'association des terminaux UE_1,..., UE_K avec des faisceaux respectifs de la seconde grille GoB_2. Cette étape E2 d'association est mise en oeuvre par le module d'association gNB_B de la station de base gNB.

L'association d'un terminal UE_i avec un faisceau de la seconde grille GoB_2 peut s'effectuer en fonction par exemple d'une information reçue en provenance dudit terminal UE_i et reflétant un niveau de qualité d'une transmission de données vers le terminal UE_i utilisant ledit faisceau.

L'information remontée par le terminal UE_i peut être de différentes natures. Ainsi, il peut s'agir par exemple d'un indice correspondant au faisceau optimisant un critère de qualité donné considéré au niveau du terminal (par exemple, optimisant le débit instantané, la puissance reçue, le rapport signal-sur-interférence plus bruit, etc.), ou d'un indicateur du niveau de qualité de la transmission (aussi désigné par CQI pour « Channel Quality Information » en anglais), etc. En variante, le terminal peut remonter un ensemble d'indices de faisceaux ordonnés correspondant aux faisceaux maximisant le critère de qualité considéré et classés par ordre décroissant, l'indice fourni en premier correspondant à celui optimisant le critère de qualité considéré (par exemple la puissance reçue par le terminal).

En variante, le critère de qualité peut être évalué par la station de base pour chaque terminal en fonction de l'information de qualité remontée par ce terminal.

Plus précisément ici, la station de base détermine, sur la base des informations reçues des terminaux UE_1,...,UE_K, quel faisceau Fj (j étant un indice entier supérieur ou égal à 1) parmi l'ensemble des faisceaux de la seconde grille GoB_2 doit être attribué à quel terminal de sorte à optimiser la fonction de coût qu'elle cherche à optimiser sur la cellule. On note que, dans un mode particulier de réalisation, l'association des faisceaux aux terminaux et l'ordonnancement des terminaux peuvent être réalisés conjointement par la station de base suivant l'algorithme retenu pour optimiser la fonction de coût. Dans le mode de réalisation décrit ici, ces deux étapes sont menées de façon séquentielle, comme décrit plus en détail ci-après.

Dans la suite de la description, pour faciliter la compréhension de l'invention, on suppose que l'ensemble des faisceaux de la seconde grille GoB_2 est muni d'une relation d'ordre définie par l'indice j d'un faisceau Fj. Dit autrement, ledit ensemble de faisceaux peut être classé sous la forme d'une liste, le rang d'un faisceau Fj au sein de cette liste étant donné par son indice j. On suppose également, dans le mode de réalisation décrit ici, que l'information remontée d'un terminal UE_i vers la station de base gNB comporte dès lors l'indice j du faisceau Fj correspondant à la meilleure puissance reçue au niveau du terminal UE_i.

Par exemple, et de manière connue en soi, l'étape E2 d'association fait suite à l'envoi, de la station de base gNB et vers les terminaux UE_1,..., UE_K, via chacun des faisceaux Fj émis de manière séquentielle (technique de « beam sweeping »), de séquences pilotes comprenant les indices des faisceaux desquels elles sont issues. Chaque terminal UE_i évalue alors, pour chacun des faisceaux Fj, et sur la base des séquences pilotes qu'il reçoit, un niveau de qualité de la transmission des séquences pilotes via chacun des faisceaux Fj. Ce niveau de qualité correspond dans le mode de réalisation décrit ici aux puissances des séquences pilotes reçues par le terminal UE_i. Puis, chaque terminal UE_i identifie, en fonction des calculs effectués, le faisceau Fj optimisant le niveau de qualité à son égard, pour finalement remonter l'indice de ce faisceau optimal vers la station de base gNB. La station de base gNB traite alors les indices des faisceaux remontés par les terminaux UE_1,..., UE_K pour déduire les associations faisceau / terminal qui conduisent à des performances optimales du système 1 pour l'ensemble desdits terminaux UE_1,..., UE_K.

Dans une variante de réalisation, chaque terminal UE_i classe les faisceaux Fj par ordre décroissant du niveau de qualité calculé et remonte à la station de base gNB les indices d'un nombre déterminé de faisceaux correspondant aux meilleurs niveaux de qualité. La station de base gNB traite alors les indices des faisceaux remontés par les terminaux UE_1,..., UE_K pour déduire les associations faisceau / terminal qui conduisent à des performances maximales du système 1 pour l'ensemble desdits terminaux UE_1,..., UE_K au regard de la fonction de coût qu'elle cherche à optimiser sur la cellule. A cet effet, elle peut optimiser conjointement la fonction de coût en sélectionnant les meilleures associations faisceaux/terminaux et ordonnancement des terminaux. En variante, elle peut utiliser un premier critère d'ordonnancement pour sélectionner les meilleures associations faisceaux/terminaux, puis un deuxième critère d'ordonnancement pour ordonner les terminaux servis, le premier et le deuxième critère pouvant être identiques ou différents.

Il importe de noter que les faisceaux identifiés en premier dans l'information remontée par chacun des terminaux peuvent différer des faisceaux que la station de base gNB associent au final à ces terminaux à l'issue de l'étape E2 d'association. En effet, l'optimisation de la fonction de coût considérée pour l'ordonnancement des terminaux UE_1,..., UE_K est réalisée en tenant compte de la qualité de transmission de l'ensemble des terminaux et peut donc conduire à associer des faisceaux à ces terminaux qui diffèrent de ceux que chacun desdits terminaux choisirait pour optimiser la qualité de la transmission à son égard.

Aussi, et de manière générale, la station de base gNB reste maîtresse de la manière dont les faisceaux sont associés aux différents terminaux, afin d'optimiser les performances du système 1 de communication sans fil. Ainsi, la station de base gNB peut tenir compte ou pas des informations reçues en provenance des terminaux UE_1,..., UE_K. D'ailleurs, rien n'exclut non plus que la station de base gNB associent des faisceaux respectifs aux terminaux sans que ces derniers ne remontent d'informations à proprement parler sur les faisceaux vers ladite station gNB (elle peut par exemple, sous certains hypothèses, s'appuyer sur une estimation réalisée par ses soins de la qualité des transmissions sur les différents faisceaux émis vers les terminaux, notamment en cas de réciprocité du canal de propagation).

Conformément à l'invention, le procédé de sélection comporte également une étape E3 de sélection d'un ou plusieurs faisceaux Fj non-adjacents de la seconde grille GoB_2 pour transmettre des données aux terminaux UE_1,..., UE_K lors d'au moins un intervalle temporel donné INT_s (s étant un indice entier supérieur ou égal à 1). Autrement dit, lorsque plusieurs faisceaux Fj sont sélectionnés, lesdits faisceaux sélectionnés sont séparés entre eux deux à deux par au moins un faisceau non sélectionné.

Par « lors d'au moins un intervalle temporel », on fait référence ici au fait que seuls le ou les faisceaux sélectionnés dans la seconde grille GoB_2 sont destinés à être générés simultanément au cours dudit au moins un intervalle temporel, cet aspect étant détaillé ultérieurement.

Ledit au moins un intervalle temporel correspond par exemple à un intervalle temporel dit de transmission « TTI » (acronyme de l'expression anglo-saxonne « Transmission Time Interval »). De manière connue en soi, un tel intervalle temporel TTI représente la plus petite unité de temps, au regard du protocole de communication mis en oeuvre au sein du réseau de télécommunications sans fil, pendant laquelle un terminal peut recevoir ou émettre des données. Par exemple, dans le cadre du réseau 5G de l'invention, la durée dudit intervalle TTI prend une valeur égale à 1 ms (milliseconde), 0,5 ms, 0,25 ms, 0,125 ms, etc.

Bien entendu, rien n'exclut de considérer un intervalle temporel autre qu'un intervalle TTI, comme par exemple un intervalle temporel de durée plus importante qu'une durée proposée par le protocole de communication mis en oeuvre au sein du réseau de télécommunications sans fil. D'une manière générale, aucune limitation n'est attachée à la manière dont est défini ledit au moins un intervalle temporel.

Dans le cadre de la présente invention, si plusieurs faisceaux sont sélectionnés pour un intervalle temporel, seuls ces faisceaux sélectionnés sont destinés à être générés et émis de manière simultanée lors dudit intervalle pour transmettre des données. Aussi, on introduit ici l'expression selon laquelle des faisceaux destinés à être générés et émis de manière simultanée pour transmettre des données forment un « motif d'émission ». Cette notion de « motif d'émission » peut bien entendu s'étendre au cas où un seul faisceau est sélectionné pour un intervalle temporel donné.

On note que le fait de sélectionner des faisceaux non-adjacents de la seconde grille GoB_2 permet avantageusement de réduire le recouvrement des faisceaux sélectionnés lorsqu'ils sont générés et émis de manière simultanée pour transmettre des données au cours de l'intervalle temporel auquel ils sont associés, et donc de réduire les interférences générées au niveau des terminaux associés aux faisceaux sélectionnés.

On note par ailleurs que rien n'exclut que des faisceaux sélectionnés pour un intervalle temporel soient distants deux à deux entre eux de plus d'un faisceau non sélectionné.

La suite de la description vise à détailler différents modes de mise en oeuvre du procédé de sélection, et plus particulièrement de ladite étape E3 de sélection.

Pour la suite de la description, et afin de faciliter la présentation desdits modes de mise en oeuvre, on considère de manière non limitative que la configuration initiale et la nouvelle configuration de la station de base gNB sont respectivement identiques à celles des figures 1A et 1B. Autrement dit, la première grille GoB_1 permet de générer les faisceaux F1 à F7 (N1 = 7), et la seconde grille GoB_2 permet de générer les faisceaux F1 à F13 (N2 =13).

On fait également l'hypothèse selon laquelle le nombre de terminaux appartenant au système 1 de communications est égal à cinq (K = 5). Plus particulièrement, ledit système 1 comporte :
- un terminal UE_1 contenu dans le seul faisceau F1,
- un terminal UE_2 contenu dans le seul faisceau F5,
- un terminal UE_3 contenu dans le seul faisceau F6,
- un terminal UE_4 contenu dans le seul faisceau F7
- un terminal UE_5 contenu dans le seul faisceau F12.

On considère également, de manière non limitative, que :
- le critère d'ordonnancement CR_O s'appuie sur la métrique d'équité proportionnelle ;
- le critère de qualité considéré au niveau de chaque terminal est la quantité de puissance électromagnétique reçue de la part de chacun des terminaux UE_1,..., UE_5. Ce critère reflète le niveau de qualité des données transmises via les faisceaux vers chacun des terminaux. A cet effet, lesdits terminaux UE_1,..., UE_5 sont par exemple équipés de moyens d'acquisition de type connu en soi et aptes à l'estimation d'une quantité de puissance reçue. On suppose que l'information remontée par chaque terminal UE_i à la station de base gNB est l'indice du faisceau optimisant la puissance électromagnétique reçue au niveau de chaque terminal. Aussi, à l'issue de l'étape E2, et en raison des positions respectives desdits terminaux UE_1,..., UE_5, on obtient que le terminal UE_1 est associé au faisceau F1, le terminal UE_2 est associé au faisceau F5 , le terminal UE_3 est associé au faisceau F6, le terminal UE_4 est associé au faisceau F7 et le terminal UE_5 est associé au faisceau F12.

La figure 5 représente schématiquement un premier mode de mise en oeuvre du procédé de sélection de la figure 4 dans lequel l'étape E3 de sélection est itérée pour une pluralité d'intervalles temporels INT_1,..., INT_Q distincts entre eux (Q étant un entier supérieur à 1). Par « intervalles temporels distincts entre eux », on fait référence ici à des intervalles d'intersection vide ou bien, en alternative, pouvant partager une borne commune, une telle distinction n'étant pas limitative pour la mise en oeuvre du procédé de sélection selon l'invention.

Les itérations de l'étape E3 sont par exemple exécutées en suivant l'ordre chronologique des intervalles temporels INT_1,..., INT_Q, étant entendu que ledit ordre chronologique fait référence à l'ordre chronologique des bornes inférieures respectives desdits intervalles INT_1,..., INT_Q. Rien n'exclut toutefois de considérer, suivant d'autres exemples non détaillés ici, un ordre d'exécution des itérations qui diffère dudit ordre chronologique.

Tel qu'illustré par la figure 5, l'étape E3 de sélection est mise en oeuvre, dans ce premier mode de mise en oeuvre, de sorte qu'un seul faisceau Fj est sélectionné pour chaque intervalle temporel INT_s (s étant compris ici entre 1 et Q) pour transmettre des données vers un unique terminal.

Aussi, et comme cela a déjà été mentionné auparavant, seul le faisceau Fj sélectionné pour un intervalle INT_s est destiné à être généré et émis au cours dudit intervalle INT_s. On comprend dès lors que les sélections opérées au cours dudit premier mode de mise en oeuvre visent une émission SU-MIMO (« SU » étant l'acronyme de l'expression anglo-saxonne « Single User ») de la part de la station de base gNB.

On note que dans ce premier mode de mise en oeuvre, eu égard au fait qu'un seul faisceau est sélectionné au cours de chaque itération, la contrainte de non-adjacence est automatiquement respectée.

Selon ledit premier mode de mise en œuvre, l'étape E3 de sélection est par ailleurs mise en œuvre de sorte que le faisceau Fj sélectionné pour un intervalle INT_s est le faisceau associé à un terminal UE_i optimisant, lors de l'itération de l'étape E3 de sélection considérée pour ledit intervalle temporel INT_s, la fonction de coût optimisée selon le critère d'ordonnancement CR_O et évaluée sur au moins une partie de la pluralité des terminaux UE_1,..., UE_5.

Le nombre de terminaux considérés pour l'évaluation de la fonction de coût optimisée par le critère d'ordonnancement CR_O est par exemple prédéterminé. Dans le présent mode de mise en œuvre, les terminaux UE_1,..., UE_5 étant fixes, ce nombre prédéterminé est préférentiellement égal à cinq, autrement dit, le critère d'ordonnancement est appliqué sur l'ensemble des terminaux considérés. Rien n'exclut toutefois de considérer un nombre inférieur à cinq lors d'une, plusieurs voire toutes les itérations de l'étape E3, ni même de considérer un nombre différent d'une itération à une autre.

D'une manière générale, aucune limitation n'est attachée au nombre de terminaux considérés pour l'application du critère d'ordonnancement, qui peut en outre être dynamique si par exemple des terminaux sont mobiles et donc susceptibles d'entrer dans (respectivement sortir de) la cellule de communication associée à la station de base gNB.

Enfin, aucune limitation n'est non plus attachée au nombre Q d'intervalles temporels considérés. L'homme du métier comprendra en effet que ce nombre Q détermine le nombre d'itérations effectuées au cours du procédé de sélection, la durée d'exécution de ce procédé n'étant pas un facteur limitant de l'invention (sous réserve, bien entendu, d'assurer que les terminaux considérés soient servis).

Afin de donner un exemple d'exécution dudit premier mode de mise en œuvre, considérons les hypothèses suivantes :
- cinq intervalles temporels INT_1,..., INT_5, distincts entre eux et correspondant à des intervalles de type TTI, sont considérés, lesdits intervalles étant classés dans cet ordre de manière chronologique (INT_2 est ultérieur à INT_1, etc.),
- les itérations de l'étape E3 sont exécutées en suivant l'ordre chronologique des intervalles temporels INT_1,..., INT_5,
- le critère d'ordonnancement CR_O est appliqué, lors de chaque itération de l'étape E3, sur l'ensemble des terminaux UE_1,..., UE_5,
- lors de la première itération de l'étape E3, les terminaux UE_1,..., UE_5 sont classés, par métrique d'équité proportionnelle décroissante, suivant l'ordre suivant : UE_3, UE_4, UE_1, UE_5, UE_2, (i.e. la métrique d'équité proportionnelle de UE_3 est supérieure à celle de UE_4, etc.).

Selon cet exemple d'exécution, au cours de la première itération de l'étape E3, pour l'intervalle temporel INT_1, le faisceau F6 est sélectionné étant donné qu'il s'agit du faisceau associé au terminal UE_3 qui maximise la fonction de coût optimisée selon le critère d'ordonnancement CR_O. A l'issue de cette itération, la métrique d'équité proportionnelle du terminal UE_3 devient inférieure à celle de UE_2, de sorte la métrique d'équité proportionnelle du terminal UE_4 est désormais maximale parmi toutes les métriques associées aux terminaux UE_1,..., UE_5. Par conséquent, le faisceau sélectionné au cours de la deuxième itération de l'étape E3, pour l'intervalle temporel INT_2, est le faisceau F7. De la même manière, on obtient que les faisceaux sélectionnés au cours des troisième, quatrième et cinquième itérations sont respectivement les faisceaux F1, F12 et F5.

En définitive, et selon cet exemple d'exécution, on obtient cinq motifs d'émission, chacun de ces motifs étant constitué d'un seul faisceau.

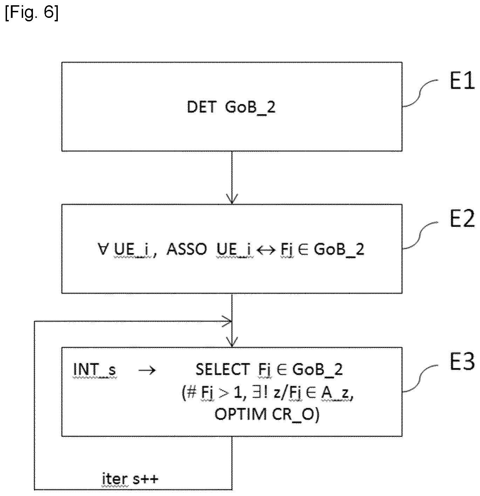

La figure 6 représente schématiquement un deuxième mode de mise en oeuvre du procédé de sélection de la figure 4 dans lequel :
- l'étape E3 de sélection est itérée pour une pluralité d'intervalles temporels INT_1,..., INT_Q distincts entre eux (Q étant un entier supérieur à 1),
- une pluralité de faisceaux est sélectionnée pour servir une pluralité de terminaux attachés à la station de base gNB lors de chaque intervalle INT_s (s étant un indice compris entre 1 et Q). On suppose ici qu'un faisceau sert un unique terminal durant un intervalle temporel.

L'ensemble des considérations techniques possibles évoquées ci-avant dans le cadre du premier mode de mise en oeuvre (indépendamment de l'exemple d'exécution décrit pour ce dernier), et qui sont relatives à la topologie et au nombre des intervalles temporels, ainsi qu'à l'ordre d'exécution des itérations de l'étape E3, restent ici valables.

Aussi, et comme cela a déjà été mentionné auparavant, seuls les faisceaux sélectionnés pour un intervalle INT_s sont destinés à être générés et émis au cours dudit intervalle INT_s. On comprend dès lors que les sélections opérées au cours dudit deuxième mode de mise en oeuvre visent une émission MU-MIMO (« MU » étant l'acronyme de l'expression anglo-saxonne « Multiple User ») de la part de la station de base gNB.

Selon ledit deuxième mode de mise en oeuvre, l'étape E3 de sélection est mise en oeuvre de sorte que les faisceaux F1 à F13 sont regroupés, en fonction de leurs indices respectifs, dans des ensembles prédéterminés A_1,..., A_Z (Z étant un indice entier supérieur ou égal à 1). En outre, les faisceaux sélectionnés pour chaque intervalle temporel INT_s sont les faisceaux appartenant à un desdits ensembles prédéterminés A_1,..., A_Z, étant entendu que, préférentiellement, les faisceaux sélectionnés pour deux intervalles distincts appartiennent respectivement à deux ensembles distincts.

Bien entendu, on rappelle ici que la contrainte de non-adjacence des faisceaux sélectionnés se doit d'être respectée au cours de la mise en oeuvre de l'étape E3, ce qui implique qu'aucun ensemble A_z (z étant un indice entier compris entre 1 et Z) n'est défini de manière arbitraire.

Afin de donner un exemple d'exécution dudit deuxième mode de mise en oeuvre, considérons les hypothèses suivantes :
- deux intervalles temporels INT_1 et INT_2, distincts entre eux et correspondant à des intervalles de type TTI, sont considérés, lesdits intervalles étant classés dans cet ordre de manière chronologique (INT_2 est ultérieur à INT_1),
- les itérations de l'étape E3 sont exécutées en suivant l'ordre chronologique des intervalles temporels INT_1 et INT_2,
- le critère d'ordonnancement CR_O est appliqué seulement au cours de la première itération de l'étape E3, sur l'ensemble des terminaux UE_1,..., UE_5,
- les terminaux UE_1,..., UE_5 sont classés, par métrique d'équité proportionnelle décroissante, suivant l'ordre suivant : UE_3, UE_4, UE_1, UE_5, UE_2,
- deux ensembles de faisceaux A_1 et A_2 sont considérés, A_1 regroupant les faisceaux d'indices impairs et A_2 regroupant les faisceaux d'indices pairs.

Selon cet exemple d'exécution, au cours de la première itération de l'étape E3, pour l'intervalle temporel INT_1, les indices respectifs des faisceaux sélectionnés présentent tous une parité identique qui correspond à la parité de l'indice du faisceau Fj associé au terminal UE_i dont la métrique d'équité proportionnelle est maximale, parmi toutes les métriques associées aux terminaux UE_1,..., UE_5, lors de la première itération de l'étape E3. Autrement dit, cette métrique étant maximale pour UE_3 (qui est associé à F6), les faisceaux de l'ensemble A_2 sont sélectionnés pour l'intervalle INT_1, c'est-à-dire les faisceaux F2, F4, F6, F8, F10 et F12.

Ensuite, au cours de la deuxième itération de l'étape E3, pour l'intervalle temporel INT_2, les faisceaux de l'ensemble A_1 sont sélectionnés. Il s'agit donc cette fois-ci des faisceaux F1, F3, F5, F7, F9, F11 et F13.

En définitive, et selon cet exemple d'exécution, on obtient deux motifs d'émission, à savoir un premier motif d'émission constitué des faisceaux de l'ensemble A_1, et un second motif d'émission constitué des faisceaux de l'ensemble A_2.

Il apparaitra évident à l'homme de l'art que le précédent exemple d'exécution du deuxième mode de mise en oeuvre peut être généralisé au cas où un nombre Q quelconque (Q > 1) d'intervalles temporels est considéré, et où le nombre d'ensembles prédéterminés est égal audit nombre Q. En effet, si les faisceaux sélectionnés au cours de la première itération de l'étape E3 sont par exemple les faisceaux dont les indices respectifs sont congrus à q modulo Q (q étant un indice compris entre 0 et Q-1), les indices des faisceaux sélectionnés au cours de l'itération de rang p (p étant un indice compris entre 2 et Q) de l'étape E3 sont alors par exemple congrus à q-1+p module Q.

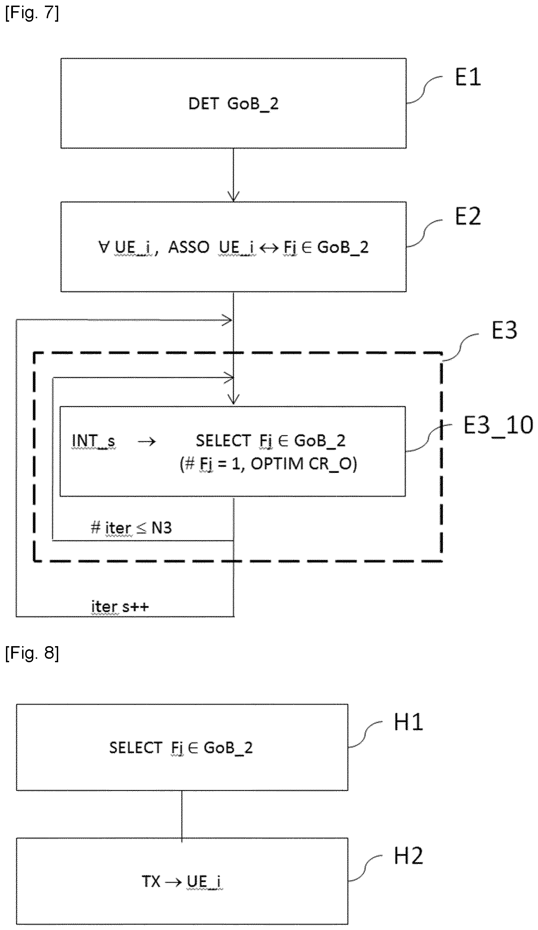

La figure 7 représente schématiquement un troisième mode de mise en oeuvre du procédé de sélection de la figure 4. Ledit troisième mode de mise en oeuvre reprend une partie des caractéristiques du deuxième mode de mise en oeuvre (figure 6), à savoir que :
- l'étape E3 de sélection est itérée pour une pluralité d'intervalles temporels INT_1,..., INT_Q distincts entre eux (Q étant un entier supérieur à 1),
- une pluralité de faisceaux est sélectionnée pour servir une pluralité de terminaux attachés à la station de base gNB lors de chaque intervalle INT_s (s étant un indice compris entre 1 et Q). On suppose ici que durant un intervalle temporel, un faisceau sert un unique terminal.

Les sélections opérées au cours dudit troisième mode de mise en oeuvre visent, comme dans le cas du deuxième mode de mise en oeuvre (figure 6), une émission MU-MIMO de la part de la station de base gNB.

L'ensemble des considérations techniques possibles évoquées ci-avant dans le cadre du premier et / ou du deuxième mode de mise en oeuvre (indépendamment des exemples d'exécution décrits pour ces premier et deuxième modes), et qui sont relatives à la topologie et au nombre des intervalles temporels, ainsi qu'à l'ordre d'exécution des itérations de l'étape E3, restent ici valables.

Selon ledit troisième mode de mise en oeuvre, l'étape E3 de sélection comporte une sous-sélection E3_10 du faisceau Fj associé à un terminal UE_i optimisant, lors de la mise en oeuvre de ladite sous-sélection, la fonction de coût optimisée selon le critère d'ordonnancement CR_O et évaluée sur au moins une partie de ladite pluralité de terminaux UE_1,..., UE_5.

On rappelle de plus ici que la contrainte de non-adjacence des faisceaux sélectionnés se doit d'être respectée au cours de la mise en oeuvre de l'étape E3. A cet effet, et d'une part, ladite sous-sélection E3_10 est itérée au plus un nombre N3 de fois. D'autre part, ladite au moins une partie de terminaux considérée au cours d'une itération de la sous-sélection E3_10 est formée de terminaux dont les faisceaux associés sont séparés des faisceaux sélectionnés lors des itérations précédentes par au moins un faisceau.

D'une manière générale, l'homme de l'art sait paramétrer le nombre N3 de sorte qu'une pluralité de faisceaux peut être sélectionnée pour chaque intervalle INT_s et que la contrainte de non-adjacence soit respectée.

Selon un exemple particulier, si la station de base est configurée pour émettre simultanément N4 faisceaux de transmission, le nombre N3 est égal à N4. Procéder de la sorte permet avantageusement de limiter la complexité (électronique, logicielle) d'implémentation de l'invention, et donc in fine de limiter le coût de réalisation de cette dernière.

Afin de donner un exemple d'exécution dudit troisième mode de mise en oeuvre, considérons les hypothèses suivantes :
- deux intervalles temporels INT_1 et INT_2, distincts entre eux et correspondant à des intervalles de type TTI, sont considérés, lesdits intervalles étant classés dans cet ordre de manière chronologique (INT_2 est ultérieur à INT_1),
- les itérations de l'étape E3 sont exécutées en suivant l'ordre chronologique des intervalles temporels INT_1 et INT_2,
- lors de la première itération de l'étape E3, les terminaux UE_1,..., UE_5 sont classés, par métrique d'équité proportionnelle décroissante, suivant l'ordre suivant : UE_3, UE_4, UE_1, UE_5, UE_2,
- pour chaque itération de l'étape E3, la sous-sélection E3_10 est itérée au plus trois fois (N3 = 3).

Selon cet exemple d'exécution, deux itérations de l'étape E3 sont mises en oeuvre, à savoir une première itération pour l'intervalle temporel INT_1 et une seconde itération pour l'intervalle INT_2. En outre, chaque itération de l'étape E3 comporte plusieurs itérations de la sous-sélection E3_10.

Plus particulièrement, en ce qui concerne la première itération de la sous-sélection E3_10 de la première itération de l'étape E3, le faisceau F6 est sélectionné étant donné qu'il s'agit du faisceau associé au terminal UE_3 qui maximise la fonction de coût optimisée selon le critère d'ordonnancement CR_O. A l'issue de cette itération, la métrique d'équité proportionnelle du terminal UE_3 devient inférieure à celle de UE_2, de sorte que les terminaux UE_1,..., UE_5 sont désormais classés, par métrique d'équité proportionnelle décroissante, suivant l'ordre suivant : UE_4, UE_1, UE_5, UE_2, UE_3.

Les terminaux considérés au cours de la deuxième itération de la sous-étape E3_10 (toujours au cours de la première itération de l'étape E3) sont : UE_1, UE_3 et UE_5. On note que UE_2 et UE_4 ne peuvent être considérés pour cette deuxième itération dans la mesure où ils sont respectivement associés aux faisceaux F5 et F7 qui sont adjacents à F6, ce dernier ayant été sélectionné au cours de la première itération. Le faisceau F1 est dès lors sélectionné étant donné qu'il s'agit du faisceau associé au terminal UE_1 qui, d'une part, maximise la fonction de coût optimisée selon le critère d'ordonnancement CR_O au cours de la deuxième itération de la sous-étape E3_10, et qui, d'autre part, n'est pas adjacent à F6. A l'issue de cette itération, la métrique d'équité proportionnelle du terminal UE_1 devient inférieure à celle de UE_3, de sorte que les terminaux UE_1,..., UE_5 sont désormais classés, par métrique d'équité proportionnelle décroissante, suivant l'ordre suivant : UE_4, UE_5, UE_2, UE_3, UE_1.

Dès lors, pour la troisième itération de la sous-étape E3_10 (toujours au cours de la première itération de l'étape E3), et pour des raisons identiques à celles mentionnées ci-avant, les terminaux UE_2 et UE_4 sont exclus. Par conséquent, le faisceau F12 est sélectionné étant donné qu'il s'agit du faisceau associé au terminal UE_5 qui, d'une part, maximise la fonction de coût optimisée selon le critère d'ordonnancement CR_O au cours de la troisième itération de la sous-étape E3_10, et qui, d'autre part, n'est pas adjacent à F1 et F6. A l'issue de cette itération, la métrique d'équité proportionnelle du terminal UE_5 devient inférieure à celle de UE_1, de sorte que les terminaux UE_1,..., UE_5 sont désormais classés, par métrique d'équité proportionnelle décroissante, suivant l'ordre suivant : UE_4, UE_2, UE_3, UE_1, UE_5.

Le nombre maximal d'itérations de l'étape de sous-sélection E3_10 ayant été atteint pour la première itération de l'étape E3 (N3 = 3), une deuxième itération de l'étape E3 est exécutée pour l'intervalle INT_2. La mise en œuvre de cette deuxième itération de l'étape E3 est similaire à celle décrite ci-avant pour la première itération de l'étape E3, sachant qu'il faut désormais tenir compte du classement mis à jour des terminaux. On obtient alors, à l'issue de cette deuxième itération de l'étape E3, que les faisceaux F7 et F5 sont sélectionnés dans cet ordre au cours de deux itérations de la sous-étape E3_10.

En définitive, et selon cet exemple d'exécution, on obtient deux motifs d'émission, à savoir un premier motif d'émission constitué des faisceaux F1, F6 et F12, et un second motif d'émission constitué des faisceaux F5 et F7.

L'invention a été décrite jusqu'à présent en considérant une pluralité d'intervalles temporels distincts entre eux ainsi que le fait que l'étape E3 de sélection était itérée pour chacun de ces intervalles temporels. L'invention reste toutefois applicable au cas où un seul intervalle temporel est considéré, un ou plusieurs faisceaux pouvant être sélectionnés pour ledit intervalle temporel, au cours d'une étape E3 de sélection mise en oeuvre suivant des considérations similaires à celles décrites ci-avant (comme par exemple dans les premier, deuxième et troisième modes de mise en œuvre).

L'invention a également été décrite jusqu'à présent en considérant qu'au cours d'un mode de mise en oeuvre (premier, deuxième ou bien troisième mode de mise en oeuvre), chaque itération de l'étape E3 était exécutée suivant des caractéristiques techniques identiques aux caractéristiques appliquées lors d'itérations précédentes.

Par exemple, si un seul faisceau est sélectionné au cours d'une première itération (comme par exemple dans le premier mode de mise en oeuvre), il en est de même pour les itérations subséquentes. Selon un autre exemple, si plusieurs faisceaux sont sélectionnés au cours d'une première itération (comme par exemple dans le troisième mode de mise en oeuvre), il en est à nouveau de même pour les itérations subséquentes.

Toutefois, l'invention couvre également la possibilité selon laquelle une ou plusieurs desdites itérations diffèrent entre elles en ce que leurs mises en oeuvre respectives font appel à des caractéristiques techniques différentes (i.e. relevant de modes de mise en oeuvre distincts).

Ainsi, à titre d'exemple nullement limitatif, une ou plusieurs étapes de sélection au cours desquelles sont sélectionnées une pluralité de faisceaux sont mises en oeuvre pour seulement une partie des intervalles temporels considérés. En ce qui concerne le ou les autres intervalles temporels, une ou plusieurs étapes de sélection au cours desquelles sont sélectionnées un seul faisceau sont mises en oeuvre.

A titre illustratif, en alternative à l'exemple d'exécution détaillé ci-avant pour le troisième mode de mise en oeuvre, et en reprenant les hypothèses de cet exemple d'exécution, le premier motif d'émission constitué des faisceaux F1, F6 et F12 est déterminé au cours de la première itération de l'étape E3. Ainsi, seuls les faisceaux F5 et F7 n'ont pas encore été sélectionnés à l'issue de la première itération. Ils le sont alors au cours respectivement de deux itérations de l'étape E3 exécutées conformément au premier mode de mise en oeuvre détaillé ci-avant. On comprend dès lors que dans cet exemple trois intervalles temporels sont considérés (INT_1 pour le motif F1, F6 et F12, INT_2 pour le motif F7, et INT_3 pour le motif F5).

D'une manière générale, si plusieurs itérations de l'étape E3 sont considérées, chaque itération peut être mise en oeuvre selon n'importe lequel des modes de mises en oeuvre décrits ci-avant, dès lors que la combinaison desdits modes, au travers desdits itérations de l'étape E3, est techniquement opérante (i.e. respect de la contrainte de non-adjacence des faisceaux sélectionnés au cours d'une itération de l'étape E3, possibilité effective de sélectionner plusieurs faisceaux au cours d'une itération le cas échéant, etc.).

Par ailleurs, l'invention a aussi été décrite jusqu'à présent en considérant des modes de mise en oeuvre dans lesquels les terminaux étaient respectivement associés à des faisceaux de la seconde grille GoB_2, via ladite étape E2 d'association. L'invention reste cependant applicable au cas où une telle étape E2 d'association n'est pas mise en oeuvre. Dit autrement, ladite étape E2 d'association n'est pas essentielle à l'invention.

A titre illustratif, en alternative à l'exemple d'exécution détaillé ci-avant pour le deuxième mode de mise en oeuvre (figure 6), considérons les hypothèses suivantes :
- deux intervalles temporels INT_1 et INT_2, strictement distincts entre eux et correspondant à des intervalles de type TTI, sont considérés, lesdits intervalles étant classés dans cet ordre de manière chronologique (INT_2 est ultérieur à INT_1),
- les itérations de l'étape E3 sont exécutées en suivant l'ordre chronologique des intervalles temporels INT_1 et INT_2
- deux ensembles de faisceaux A_1 et A_2 sont considérés, A_1 regroupant les faisceaux d'indices impairs et A_2 regroupant les faisceaux d'indices pairs.

Selon cet exemple alternatif d'exécution, l'ordre dans lequel les ensembles A_1 et A_2 sont considérés pour lesdits intervalles INT_1 et INT_2 est prédéterminé. Ainsi, les faisceaux de l'ensemble A_1 sont sélectionnés pour l'intervalle INT_1. Les faisceaux de l'ensemble A_2 sont quant à eux sélectionnés pour l'intervalle INT_2. Ainsi, l'ordre des motifs d'émission est désormais inversé par rapport à l'ordre obtenu ci-avant pour ledit deuxième mode de mise en oeuvre. On comprend alors que dans cet exemple alternatif d'exécution, il n'est plus nécessaire de connaitre la parité de l'indice j associé au terminal UE_i maximisant la fonction de coût optimisée selon le critère d'ordonnancement CR_O lors de la première itération de l'étape E3.

Par ailleurs, l'invention a aussi été décrite jusqu'à présent en considérant des modes de mise en oeuvre dans lesquels les terminaux remontent à la station de base un unique faisceau optimisant au niveau de chacun de ces terminaux la qualité de la transmission vers chacun de ces terminaux. Toutefois en variante, comme mentionné précédemment, chaque terminal peut remonter une pluralité d'indices correspondant aux P premiers faisceaux maximisant la qualité de la transmission vers ce terminal, P désignant un entier supérieur à 1 (par exemple P inférieur ou égal à 5). Dans ce cas, la station de base gNB peut, lors de l'optimisation de la fonction de coût correspondant au critère d'ordonnancement choisi pour sélectionner les terminaux servis lors d'un intervalle temporel, être amenée à associer un faisceau à un terminal qui ne correspond pas nécessairement au faisceau optimisant la qualité de la transmission au niveau de ce terminal, En effet, sélectionner et activer le meilleur faisceau pour chaque terminal peut conduire à augmenter l'interférence au niveau des terminaux et à réduire la puissance pouvant être émise sur chaque faisceau. En outre, cela peut retarder la transmission des données vers certains terminaux. On peut donc envisager, lors de l'optimisation de la fonction de coût, que la station de base gNB associe à certains terminaux les faisceaux correspondant au 2^{ème} (ou 3^{ème}, etc.) choix de ces terminaux (c'est-à-dire aux indices remontés en 2^{ème} ou en 3^{ème}, etc. à la station de base). Ainsi, selon cette variante, la station de base gNB optimise la fonction de coût en considérant plusieurs configurations possibles d'associations entre les faisceaux et les terminaux, certaines associations s'appuyant sur les seconds, troisièmes, etc. choix des faisceaux faits par les terminaux.

De plus, et suivant un autre aspect, l'invention concerne également un procédé de transmission, par la station de base gNB du système 1 de communications sans fil, de données à au moins un terminal UE_i. Ledit procédé de transmission s'appuie avantageusement sur le procédé de sélection précédemment décrit afin d'améliorer le fonctionnement dudit au moins un terminal UE_i, en comparaison des solutions de l'art antérieur.

La figure 8 représente, sous forme d'ordinogramme, les principales étapes du procédé de transmission selon l'invention telles qu'elles sont mises en oeuvre par la station de base gNB.

Tel qu'illustré par la figure 8, ledit procédé de transmission comporte dans un premier temps une étape H1 de sélection d'au moins un faisceau Fj de transmission pour transmettre des données audit au moins un terminal UE_i selon un procédé de sélection conforme à l'invention.

Le procédé de transmission comporte également une étape H2 de transmission de données audit au moins un terminal au moyen dudit au moins un faisceau sélectionné. Cette étape H2 de transmission est mise en oeuvre par les moyens de communication 6 de la station de base gNB.

Dans un mode particulier de mise en oeuvre (non représenté sur la figure 8), une pluralité d'intervalles temporels est considérée, les étapes d'obtention H1 et de transmission H2 étant itérées pour chacun desdits intervalles temporels.

Par exemple, l'étape H1 de sélection est réalisée au cours de chacun desdits intervalles temporels. Un motif d'émission est dès lors obtenu pour chaque intervalle et est appliqué par la station de base gNB au cours dudit intervalle. Un tel exemple trouve une application particulièrement avantageuse dans le cas où les intervalles temporels sont de type TTI et où le procédé d'émission est exécuté en temps réel.

Bien entendu, l'invention couvre également le cas où une pluralité d'intervalles temporels est considérée, et où l'ensemble des motifs d'émission respectivement associés à ces intervalles sont déterminés au cours de l'étape H1 d'obtention, avant toute mise en œuvre de l'étape H2 de transmission.

## Revendications

1. Procédé de sélection, par une station de base (gNB) multi-antennes d'un système (1) de communications sans fil, d'au moins un faisceau (Fj) de transmission pour transmettre des données à au moins un terminal (UE_i), ledit procédé comprenant :
- une étape (E1) de détermination d'une grille (GoB_2) de N2 faisceaux de transmission destinés à couvrir une portion de l'espace servie par la station de base et générés en utilisant N1 antennes de la station de base, N1 et N2 désignant des entiers tels que N2 > N1,
- une étape (E3) de sélection d'un ou plusieurs faisceaux (Fj) non-adjacents de ladite grille pour transmettre des données audit au moins un terminal lors d'au moins un intervalle temporel donné (INT_s).

2. Procédé selon la revendication 1, dans lequel :
- l'étape de sélection est itérée pour une pluralité d'intervalles temporels,
- un seul faisceau (Fj) associé à au moins un terminal (UE_i) est sélectionné pour chaque intervalle temporel (INT_s) pour transmettre des données audit au moins un terminal associé audit faisceau, ledit faisceau sélectionné et ledit au moins un terminal associé optimisant une fonction de coût lors de l'itération de l'étape de sélection considérée pour ledit intervalle temporel.

3. Procédé selon la revendication 1 ou 2, ledit procédé comportant, avant l'étape (E3) de sélection, une étape (E2) d'association d'une pluralité de terminaux (UE_i) avec des faisceaux (Fj) respectifs de la grille (GoB_2), et dans lequel :
- l'étape (E3) de sélection est itérée pour une pluralité d'intervalles temporels,
- un seul faisceau (Fj) est sélectionné pour chaque intervalle temporel ledit faisceau sélectionné étant le faisceau associé à au moins un terminal optimisant, lors de l'itération de l'étape de sélection considérée pour ledit intervalle temporel, un critère d'ordonnancement (CR_O) donné appliqué sur au moins une partie de ladite pluralité de terminaux.

4. Procédé selon la revendication 1, dans lequel une pluralité de faisceaux (Fj) est sélectionnée pour servir une pluralité de terminaux attachés à la station de base lors dudit au moins un intervalle temporel (INT_s).

5. Procédé selon la revendication 4, dans lequel les faisceaux (Fj) sont associés à des indices respectifs distincts, lesdits faisceaux étant regroupés, en fonction de leurs indices respectifs, dans des ensembles (A_z) prédéterminés, les faisceaux sélectionnés pour ledit au moins un intervalle temporel (INT_s) étant les faisceaux appartenant à un desdits ensembles prédéterminés.

6. Procédé selon la revendication 4, dans lequel l'étape (E3) de sélection comporte une sous-sélection (E3_10) du faisceau associé à au moins un terminal optimisant, lors de la mise en oeuvre de ladite sous-sélection, une fonction de coût évaluée sur au moins une partie de ladite pluralité de terminaux, ladite sous-sélection étant itérée au plus un nombre déterminé N3 de fois, et ladite au moins une partie de terminaux considérée au cours d'une itération de la sous-sélection étant formée de terminaux dont les faisceaux associés sont séparés des faisceaux sélectionnés lors des itérations précédentes par au moins un faisceau.

7. Procédé selon la revendication 4 ou 6, ledit procédé comportant, avant l'étape (E3) de sélection, une étape d'association de ladite pluralité de terminaux (UE_i) avec des faisceaux (Fj) respectifs de la grille (GoB_2), l'étape de sélection comportant une sous-sélection (E3_10) du faisceau associé à un terminal optimisant, lors de la mise en oeuvre de ladite sous-sélection, un critère d'ordonnancement (CR_O) donné appliqué sur au moins une partie de ladite pluralité de terminaux,
ladite sous-sélection étant itérée au plus un nombre déterminé N3 de fois, et ladite au moins une partie de terminaux considérée au cours d'une itération de la sous-sélection étant formée de terminaux dont les faisceaux associés sont séparés des faisceaux sélectionnés lors des itérations précédentes par au moins un faisceau.

8. Procédé selon l'une quelconque des revendications 6 et 7, dans lequel la station de base est configurée pour émettre simultanément N4 faisceaux de transmission, le nombre N3 étant égal à N4.

9. Procédé selon l'une quelconque des revendications 3 ou 7, dans lequel le critère d'ordonnancement (CR_O) correspond à l'une quelconque des métriques parmi :
- une métrique d'équité proportionnelle, d'équité proportionnelle exponentielle ou d'équité proportionnelle pondérée ;
- une métrique d'équité Max-Min ;
- une métrique dépendant de services fournis aux terminaux ;
- une métrique d'attente équitable,
- une métrique de débit maximal.

10. Procédé selon l'une quelconque des revendications 4 à 9, dans lequel l'étape (E3) de sélection est itérée pour une pluralité d'intervalles temporels (INT_s) distincts entre eux.

11. Procédé de transmission, par une station de base (gNB) multi-antennes d'un système (1) de communications sans fil, de données à au moins un terminal, ledit procédé de transmission comportant :
- une étape (H1) de sélection d'au moins un faisceau (Fj) de transmission pour transmettre des données audit au moins un terminal selon un procédé de sélection conforme à l'une quelconque des revendications 1 à 10,
- une étape (H2) de transmission de données audit au moins un terminal au moyen dudit au moins un faisceau sélectionné.

12. Programme d'ordinateur comportant des instructions pour la mise en oeuvre d'un procédé de sélection selon l'une quelconque des revendications 1 à 10 ou d'un procédé de transmission selon la revendication 11 lorsque ledit programme est exécuté par un ordinateur.

13. Support d'enregistrement lisible par un ordinateur sur lequel est enregistré un programme d'ordinateur selon la revendication 12.

14. Station de base (gNB) multi-antennes d'un système (1) de communications sans fil, ladite station de base comportant :
- un module de détermination (gNB_A), configuré pour déterminer une grille (GoB_2) de N2 faisceaux de transmission destinés à couvrir une portion de l'espace servie par la station de base et générés en utilisant N1 antennes de la station de base, N1 et N2 désignant des entiers tels que N2 > N1,
- un module de sélection (gNB_C), configuré pour sélectionner un ou plusieurs faisceaux (Fj) non-adjacents de ladite grille pour transmettre des données audit au moins un terminal lors d'au moins un intervalle temporel donné,
- des moyens de communication (6), configurés pour transmettre lesdites données audit au moins un terminal lors dudit moins un intervalle temporel donné.

15. Système (1) de communications sans fil comportant au moins une station de base (gNB) selon la revendication 14 ainsi qu'au moins un terminal (UE_i) attaché à ladite au moins une station de base.
